# EUROPEAN PATENT APPLICATION

(11) **EP 1 726 485 A2**
(43) Date of publication of application: **29.11.2006**
(21) Application number: 06014652.9
(22) Date of filing: 29.06.2001
(51) Int. Cl.: B60R 7/02

(54) **Collapsible storage apparatus for vehicle cargo compartments**

(30) Priority: 29.06.2000 US 214947 P
(62) Divisional of application: 04007002.1
(71) Applicant: Collins & Aikman Plastics, Inc., Troy, MI 48098 (US)
(72) Inventor: Gehring, Thomas F.J., Scarborough Ontario M1T 2J9 (CA); Jankowski, Eric, Richmond Hill Ontario L4S 1T1 (CA); Havidic, Dejan, Toronto Ontario M4P 1Y5 (CA); Flaman, Brian, Toronto Ontario M5T 1B3 (CA)
(74) Representative: Boakes, Jason Carrington

(57) **Abstract**

Apparatus for storing items within vehicle compartments that can be manipulated into an operative position and a closed position with a single hand are provided. Apparatus includes a base (20) disposed on or within a vehicle compartment floor (14) and having a surface (22) that is exposed to the vehicle compartment (12) when the apparatus is in an operative (i.e., open) position. A rear panel (30) is pivotally attached to the base (20) and is movable between a closed position overlying the base surface and an open position substantially normal to the base surface. End panels (39a,39b) are movably attached to respective end portions of the rear panel (30). The end panels are movable between a stored position in face-to-face relation with the rear panel and an operative position disposed substantially normal to the base surface and to the rear panel. One or more partition panels (40) that are movably attached to either the rear panel (30) or to the base surface (22), may be provided.

## Description

The present invention relates generally to vehicles and, more particularly, to cargo management apparatus for use within vehicles.

Motor vehicles are typically provided with a cargo storage compartment of some type. For example, sedan-style automobiles are conventionally equipped with a trunk. Sport/utility and mini-van vehicles, in which there are two or more rows of seating, are conventionally provided with a cargo storage area behind the last row of seating.

Items carried within vehicle cargo storage areas are often free to move about during vehicle operation, which may be undesirable. Cargo netting may be used to restrain items from movement within vehicle cargo storage compartments. While such netting may adequately restrain items from movement, cargo netting may require the use of two hands to hold the cargo netting back while placing items therewithin, which may be cumbersome.

Various devices are known for dividing vehicle storage compartments to prevent movement of items stored therein. For example, U.S. Patent No. 6,027,155 to Wisniewski et al. describes a storage system for a vehicle cargo compartment that includes a cover that is removably attached to the floor of the cargo compartment and that is configured to rotate between open and closed positions. U.S. Patent No. 5,669,537 to Saleem et al. describes a storage unit that extends between, and connects to, vehicle panels of a vehicle storage area. U.S. Patent No. 5,501,384 to Wisniewski describes a storage system for a vehicle that includes a molded bin and a cover pivotally secured to the bin.

Unfortunately, these devices are somewhat complex and bulky and are not adapted to be compactly stored within the cargo storage area of a vehicle. Moreover, in automotive vehicles such as sport/utility vehicles and mini-vans, cargo storage space maybe somewhat limited. Accordingly, a need exists for a cargo storage device that can securely retain items within a cargo storage area during operation of a vehicle and that can be easily stored in an out-of-the-way location when not needed, and without requiring that the storage device be removed from the cargo storage area. In addition, a need exists to maximize the efficiency and utilization of existing cargo storage space without intruding on passenger space.

In view of the above discussion, collapsible storage apparatus for use within vehicle compartments (*e.g.,* automobile trunks, mini-van and SUV cargo areas, and the like) are provided.

According to a first aspect of the present invention there is provided an apparatus for storing items within a vehicle compartment, wherein the vehicle compartment includes a floor, the apparatus comprising:
an elongate planar panel comprising opposite first and second elongated edge portions, opposite first and second end portions, and a planar handle portion extending outwardly from the first elongated edge portion in co-planar relationship with the elongated planar panel, wherein the handle portion is configured to be grasped by a user and to move the panel between stored and operative positions;
a planar first leg member comprising opposite proximal and distal ends, wherein the first leg member proximal end is pivotally connected to the first elongated edge portion adjacent the first end portion, and wherein the first leg member distal end is pivotally attached to the floor;
a planar second leg member comprising opposite proximal and distal ends, wherein the second leg member proximal end is pivotally connected to the second elongated edge portion adjacent the first end portion, and wherein the second leg member distal end is pivotally attached to the floor;
a planar third leg member comprising opposite proximal and distal ends, wherein the third leg member proximal end is pivotally connected to the first elongated edge portion adjacent the second end portion, and wherein the third leg member distal end is pivotally attached to the floor;
a planar fourth leg member comprising opposite proximal and distal ends, wherein the fourth leg member proximal end is pivotally connected to the second elongated edge portion adjacent the second end portion, and wherein the fourth leg member distal end is pivotally attached to the floor;
wherein the elongate panel is movable between a stored position in face-to-face relation with the floor and in contacting relation with the first, second, third and fourth leg members, and an operative position in spaced-apart, face-to-face relation with the floor such that the panel can serve the function of a table and/or shelf.

According to a second aspect of the present invention there is provided a vehicle, comprising:
a compartment comprising a floor; and
an apparatus for storing items within the compartment, comprising:
   an elongate planar panel comprising opposite first and second elongated edge portions, opposite first and second end portions, and a planar handle portion extending outwardly from the first elongated edge portion in co-planar relationship with the elongated planar panel, wherein the handle portion is configured to be grasped by a user and to move the panel between stored and operative positions;
   a planar first leg member comprising opposite proximal and distal ends, wherein the first leg member proximal end is pivotally connected to the first elongated edge portion adjacent the first end portion, and wherein the first leg member distal end is pivotally attached to the floor;
   a planar second leg member comprising opposite proximal and distal ends, wherein the second leg member proximal end is pivotally connected to the second elongated edge portion adjacent the first end portion, and wherein the second leg member distal end is pivotally attached to the floor;
   a planar third leg member comprising opposite proximal and distal ends, wherein the third leg member proximal end is pivotally connected to the first elongated edge portion adjacent the second end portion, and wherein the third leg member distal end is pivotally attached to the floor;
   a planar fourth leg member comprising opposite proximal and distal ends, wherein the fourth leg member proximal end is pivotally connected to the second elongated edge portion adjacent the second end portion, and wherein the fourth leg member distal end is pivotally attached to the floor;
   wherein the elongate panel is movable between a stored position in face-to-face relation with the floor and in contacting relation with the first, second, third and fourth leg members, and an operative position in spaced-apart, face-to-face relation with the floor such that the panel can serve the function of a table and/or shelf.

According to a third aspect of the present invention there is provided an apparatus for storing items within a vehicle compartment, wherein the vehicle compartment includes a floor, the apparatus comprising:
a plurality of elongate panels pivotally attached to the floor in adjacent, spaced-apart relationship, wherein each panel comprises opposite front and rear sides, wherein the panels are collectively movable between closed and open positions, wherein the front side of each panel is in overlying, face-to-face relation with the floor when in the closed position, and wherein the panels are collectively disposed substantially transverse to the floor when in the open position to define a plurality of storage compartments for receiving items therein.

According to a fourth aspect of the present invention there is provided an apparatus for storing items within a vehicle compartment, wherein the vehicle compartment includes a floor, the apparatus comprising:
a plurality of walls pivotally attached to the floor, wherein the walls are configured to overlie the floor in a folded, flat configuration, and to unfold into a storage compartment for receiving items therein.

According to a fifth aspect of the present invention there is provided a vehicle, comprising:
a compartment comprising a floor; and
an apparatus for storing items within the compartment, comprising a plurality of walls pivotally attached to the floor, wherein the walls are configured to overlie the floor in a folded, flat configuration, and to unfold into a storage compartment for receiving items therein.

According to embodiments of the present invention a storage apparatus may include a base disposed on a vehicle compartment floor (or covering on the floor). The base includes a surface that is at least partially exposed to the vehicle compartment when the apparatus is in an operative position. The base may have a generally flat configuration and/or may have one or more portions thereof that have a sloped orientation relative to horizontal. A rear panel is pivotally attached to the base and is movable between a closed position wherein the rear panel is in overlying, face-to-face relation with the base surface and an open position wherein the rear panel is disposed substantially normal to the base surface. In the open position, the rear panel and base surface define a storage compartment for receiving items therein.

According to embodiments of the present invention, the base may be disposed at least partially beneath a vehicle compartment floor such that the rear panel is substantially flush with the floor when the rear panel is in a closed position. According to embodiments of the present invention, the base may be disposed on the floor covering such that the rear panel rests on top of the floor covering when in the closed position.

Embodiments of the present invention do not require a separate element as a base. The floor or floor covering within a vehicle compartment may serve as a "base." Moreover, embodiments of the present invention do not require that the rear panel be substantially flush with the floor (or floor covering) of a vehicle when in a closed position as described herein.

According to embodiments of the present invention, floor covering material may be disposed on the vehicle compartment floor and on a rear side of the rear panel and may serve as a hinge. The base may be disposed sufficiently beneath the vehicle compartment floor such that the rear panel and floor covering disposed thereon are substantially flush with the vehicle compartment floor and floor covering when the rear panel is in the closed position.

According to embodiments of the present invention, end panels are movably attached to respective end portions of the rear panel. The end panels are movable between a stored position in face-to-face relation with the rear panel and an operative position disposed substantially normal to the base surface and to the rear panel. The end panels move from their respective stored positions to operative positions in response to movement of the rear panel from its closed position to its open position. Alternatively, the end panels may be pivotally attached to the base surface and are movable between a stored position in face-to-face relation with the base surface and an operative position disposed substantially normal to the base surface and to the rear panel.

According to embodiments of the present invention, one or more partition panels that are movably attached to either the rear panel or to the base surface, may be provided. Each partition panel divides the compartment into multiple sections when in the operative position. Each partition panel is movable between a stored position in face-to-face relation with the rear panel (or base surface) and an operative position disposed substantially normal to the base surface and to the rear panel. Each partition panel may move from its closed position to its open position in response to movement of the rear panel from its closed position to its open position. Alternatively, movement of a partition panel may be independent of movement of the rear panel. According to other embodiments of the present invention, one or more partition panels may be removable and may have be configured to be installed relative to a rear panel in various different positions.

According to embodiments of the present invention, a handle may be attached to the partition panel (or to the rear panel) that is configured to be grasped by a user and used to move the rear panel from the closed position to the open position, thereby causing the partition panel and/or end panels to move to their respective operative positions to form compartments for receiving items therein.

According to additional embodiments of the present invention, one or more projections (*e.g.,* hooks) may be provided and may extend from the rear panel. Each such projection is configured to support articles suspended therefrom, such as loaded grocery bags, and the like.

According to additional embodiments of the present invention, cargo netting configured to enclose the compartment and items stored therewithin, may be attached to the rear panel.

According to embodiments of the present invention, one or more locking members and/or springs may be provided to maintain the rear panel in an open position. Opening of a rear panel may also be assisted via the use of biasing devices including, but not limited to, springs, telescoping struts, dampeners, and the like.

According to additional embodiments of the present invention, a storage apparatus may include a plurality of elongate panels pivotally attached within a vehicle compartment in adjacent, spaced-apart relationship, and that define a plurality of storage compartments. The panels are collectively movable between closed and open positions. In the closed position, the front side of each panel is in overlying, face-to-face relation with the vehicle floor (or base or floor covering). In the open position, the panels are collectively disposed substantially transverse to the vehicle floor (or base or floor covering) to define a plurality of storage compartments for receiving items therein.

According to additional embodiments of the present invention, an apparatus for storing items within a vehicle compartment includes an elongate panel pivotally attached to the vehicle compartment floor (or floor covering or base) via leg members. The panel is movable between a stored position in face-to-face contacting relation with the floor (or base or floor covering) and an operative position wherein the panel is in spaced-apart, face-to-face relation with the floor (or base or floor covering). In the operative position, the panel can serve the function of a table and/or shelf.

Collapsible apparatus according to embodiments of the present invention are configured for single-handed manipulation from a collapsed (*i.e.*, closed) position to an unfolded (*i.e.*, open) position, and vice-versa. An apparatus according to the present invention is moved from a stored position and snapped into an open position with one easy motion by lifting and rotating a handle. The rear panel, end walls, and partition panel are configured to snap into a locked orientation such that they remain firmly in place until it is desired to close the apparatus. When an apparatus according to embodiments of the present invention is no longer desired for use in storing items therein, the above procedures can be reversed. Accordingly, apparatus according to embodiments of the present invention can be moved quickly and easily from stored, closed positions to open, operative positions.

According to additional embodiments of the present invention, a collapsible apparatus for storing items within a vehicle compartment includes a base, first and second expandable walls, and a panel. The panel is pivotally attached to the base and is connected to the respective first and second expandable walls. The panel is movable between a closed position in overlying, face-to-face relation with the base and an open position disposed substantially transverse to the base. According to embodiments of the present invention, the panel may include an aperture formed therethrough with cargo netting overlying the aperture.

Vehicle storage apparatus according to embodiments of the present invention can be integral with a floor covering and fabricated, at least in part, from the same material as the floor covering within a vehicle compartment, thus allowing the apparatus to be folded over the floor covering with little change in the appearance of the floor covering.

Moreover, storage devices according to embodiments of the present invention can be quickly folded into a flat position such that the storage device is out of the way when not in use and/or when larger devices need to be stored within the cargo storage area.
**Fig. 1** is a perspective view of a collapsible storage apparatus for storing items within a vehicle compartment, according to embodiments of the present invention.
**Fig. 2** is a perspective view of a collapsible storage apparatus for storing items within a vehicle compartment, according to other embodiments of the present invention.
**Fig. 3** is a perspective view of a collapsible storage apparatus for storing items within a vehicle compartment, according to other embodiments of the present invention.
**Fig. 4** is a perspective view of a collapsible storage apparatus for storing items within a vehicle compartment, according to other embodiments of the present invention.
**Figs. 5A-5B** are perspective views of a collapsible storage apparatus for storing items within a vehicle compartment, according to other embodiments of the present invention, wherein **Fig. 5A** illustrates the apparatus in a closed position and **Fig. 5B** illustrates the apparatus in an open position.
**Figs. 6A-6B** are side views of the apparatus of **Figs. 5A-5B** illustrating a locking member configured to releasably secure the movable panel in an open position, wherein **Fig. 6A** illustrates the locking member in a locked position so as to prevent movement of the panel towards the base, and wherein **Fig. 6B** illustrates a force being applied to the second ends of the first and second arms to cause the locking member to allow the panel to move towards the base to a closed position.
**Figs. 7A-7B** are perspective views of a collapsible storage apparatus for storing items within a vehicle compartment, according to other embodiments of the present invention, wherein **Fig. 7A** illustrates the apparatus in a closed position and **Fig. 7B** illustrates the apparatus in an open position.
**Figs. 8A-8B** are perspective views of a collapsible storage apparatus for storing items within a vehicle compartment, according to other embodiments of the present invention, wherein **Fig. 8A** illustrates the apparatus in a closed position and **Fig. 8B** illustrates the apparatus in an open position.
**Fig. 9** is a perspective view of a collapsible storage apparatus for storing items within a vehicle compartment, according to additional embodiments of the present invention.
**Fig. 10A** is a perspective view of a collapsible storage apparatus for storing items within a vehicle compartment, according to additional embodiments of the present invention.
**Fig. 10B** is a side view of the collapsible storage apparatus of **Fig. 10A.**
**Fig. 11A** is a perspective view of a collapsible storage apparatus for storing items within a vehicle compartment, according to additional embodiments of the present invention.
**Fig. 11B** is a side view of the collapsible storage apparatus of **Fig. 11A**.
**Figs. 12A-12B, 13A-13B, 14A-14B,** and **15** illustrate collapsible storage apparatus according to other embodiments of the present invention.

### DETAILED DESCRIPTION OF THE INVENTION

The present invention now is described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

In the drawings, the thickness of lines, layers and regions may be exaggerated for clarity. It will be understood that when an element such as a layer, region, substrate, or panel is referred to as being "on" another element, it can be directly on the other element or intervening elements may also be present. In contrast, when an element is referred to as being "directly on" another element, there are no intervening elements present. It will be understood that when an element is referred to as being "connected" or "attached" to another element, it can be directly connected or attached to the other element or intervening elements may also be present. In contrast, when an element is referred to as being "directly connected" or "directly attached" to another element, there are no intervening elements present. The terms "upwardly", "downwardly", "vertical", "horizontal" and the like are used herein for the purpose of explanation only.

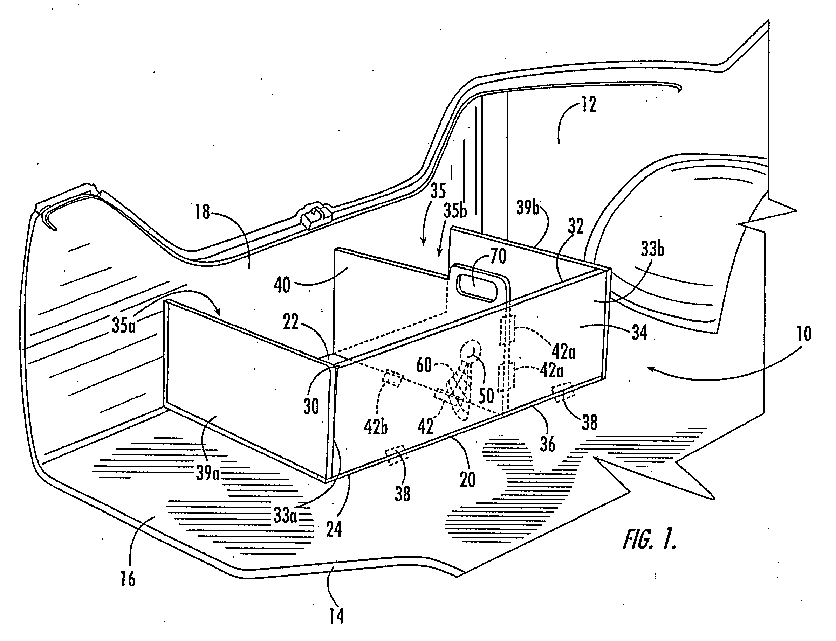

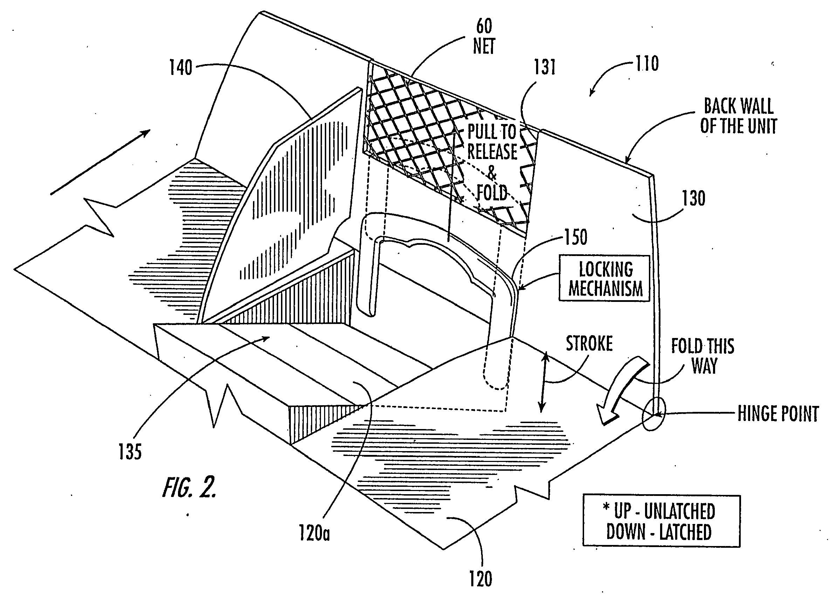

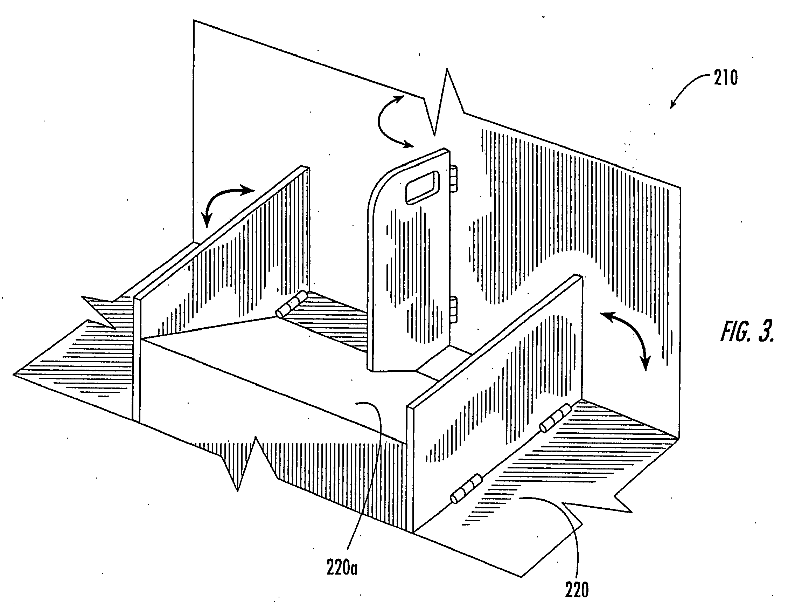

Referring to **Fig. 1,** a collapsible storage apparatus **10** for storing items within a vehicle compartment **12,** according to embodiments of the present invention is illustrated. The illustrated vehicle compartment **12** is a trunk of an automobile. However, it is understood that embodiments of the present invention may be utilized in various compartments of various vehicles, such as the rear storage area of a mini-van, truck, and/or sport utility vehicle, without limitation. The illustrated vehicle compartment **12** includes a load floor (hereinafter "floor") **14** having a floor covering (*e.g.,* carpet, mat, etc.) **16** and at least one side wall **18** extending substantially vertically from the floor **14.** The illustrated vehicle compartment **12** is partially defined by the floor **14** and the side wall **18.** Other walls, seat back, and package tray (not shown) may further define the vehicle compartment **12.**

The illustrated apparatus **10** includes a base **20** disposed on or at least partially below the floor **14** and having a surface **22** that is at least partially exposed to the vehicle compartment **12** when the apparatus **10** is in an operative (*i.e.*, open) position. The base **20** may be disposed at or below the floor covering **16.** The illustrated base **20** has a generally rectangular shape, occupies substantially less than the entire floor covering **16,** and is disposed adjacent the side wall **18.** However, the base **20** may have any size and shape, such as circular, oval, or square, and can be positioned anywhere within the vehicle compartment **12.** When the base **20** is disposed below the floor covering **16,** the floor covering **16** includes an opening **24** such that at least a portion of the surface **22** is exposed to the vehicle compartment **12** when the apparatus **10** is in an operative (*i.e.*, open) position.

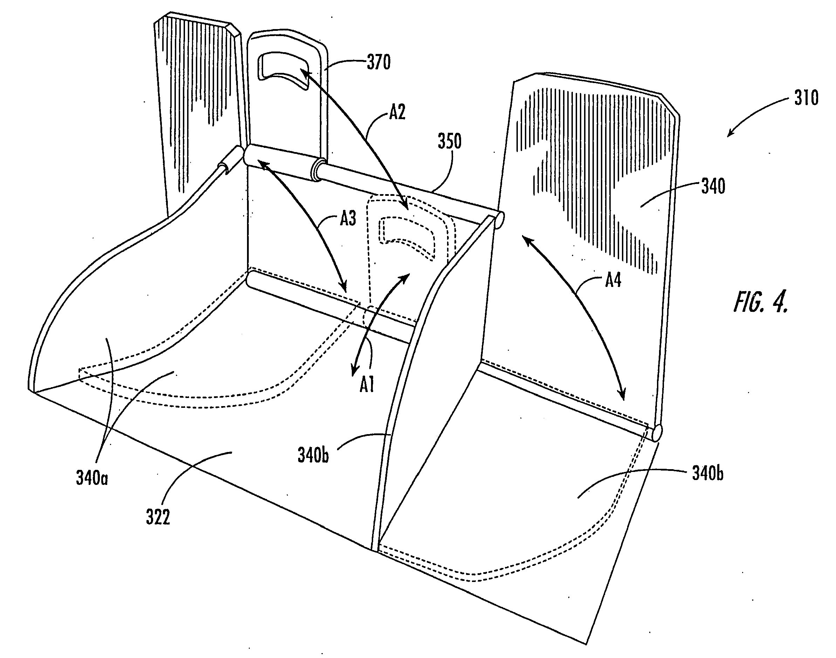

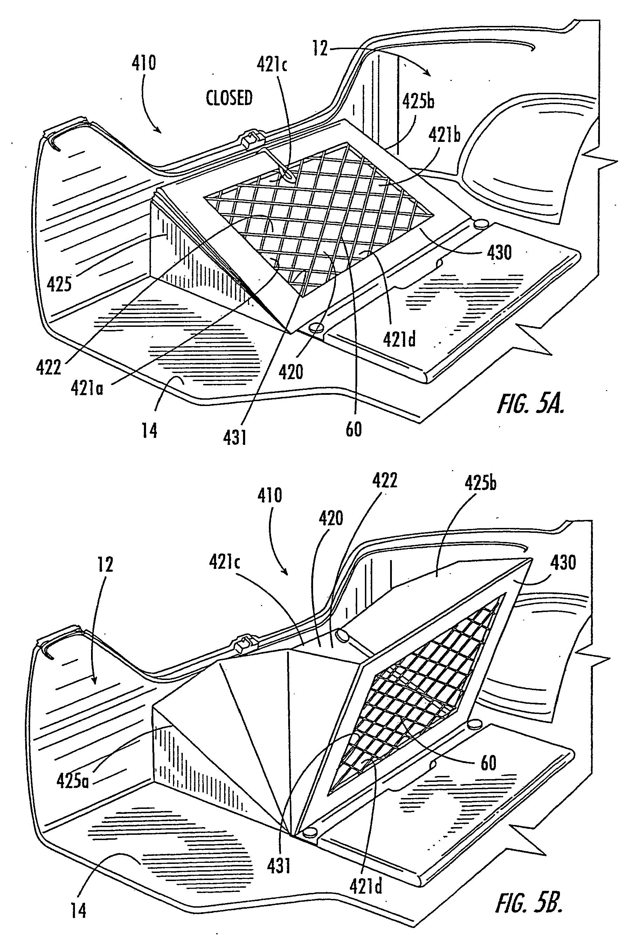

The base **20** may have a generally flat configuration and/or may have one or more portions thereof that have a sloped orientation relative to horizontal. For certain installations, the base **20** may conform to the configuration of the sheet metal in the vehicle compartment. **Figs. 2** and **3** illustrate storage apparatus **110, 210** according to alternative embodiments wherein the bases **120, 220** include portions **120a, 220a** having sloped configurations.

According to embodiments of the present invention, a floor covering within a compartment may serve the function of a "base." As such, a rear panel may be pivotally attached to the floor covering. Accordingly, it is to be understood that base **20** may be a separate element or may be a floor covering or may be the floor itself.

Referring back to **Fig. 1,** the illustrated apparatus **10** includes a rear panel **30** pivotally attached to the base **20** via one or more hinges **38** and having opposite front and rear sides **32, 34** and opposite first and second end portions **33a, 33b.** The rear panel **30** is movable between a closed position wherein the front side **32** is in overlying, face-to-face relation with the base surface **22** and an open position wherein the rear panel **30** is disposed substantially normal to the base surface **22.** In the open position, the rear panel 30 and base surface **22** (along with the end panels **39a, 39b** described below) define a storage compartment **35** for receiving items therein.

The base **20** may be disposed at least partially beneath the floor **14** such that the rear panel **30** is substantially flush with the floor **14** when the rear panel **30** is in the closed position. According to embodiments of the present invention, the base **20** may be disposed on the floor covering **16** such that the rear panel **30** rests on top of the floor covering **16** when in the closed position.

A hinge of virtually any type may be utilized to pivotally attach the rear panel **30** to the base **20** (or to the floor **14** or other vehicle component adjacent to the base **20).** According to embodiments of the present invention, the floor covering **16** (*e.g.*, carpeting) may be disposed on the floor **14** and on the rear side **34** of the rear panel **30** and may serve as a hinge. The base **20** may be disposed sufficiently beneath the floor **14** such that the rear panel **30** and floor covering **16** disposed thereon is substantially flush with the floor **14** when the rear panel **30** is in the closed position. Accordingly, the apparatus **10** may appear integral with a vehicle compartment floor **14** when the rear panel **30** is in the closed position.

However, it is to be understood that embodiments of the present invention need not be flush with a vehicle compartment floor or floor covering. Moreover, embodiments of the present invention may be configured to lie directly on top of a floor or floor covering.

Still referring to the embodiment illustrated in **Fig. 1,** first and second end panels **39a, 39b** are movably attached to the first and second end portions **33a, 33b** of the rear panel **30.** The first and second end panels **39a, 39b** are movable between a stored position in face-to-face relation with the rear panel front side **32** and an operative position disposed substantially normal to the base surface **22** and to the rear panel **30.** The first and second end panels **39a, 39b** move from their respective stored positions to operative positions in response to movement of the rear panel **30** from its closed position to its open position. The first and second end panels **39a, 39b** together with the base surface **22** and rear panel **30** define a storage compartment **35** for receiving items therein.

According to embodiments of the present invention, the first and second end panels **39a, 39b** may be pivotally attached to the base surface **22** and are movable between a stored position in face-to-face relation with the base surface **22** and an operative position disposed substantially normal to the base surface **22** and to the rear panel **30.** Even if attached directly to the base surface **22** (or adjacent thereto), the first and second end panels **39a, 39b** move from their respective stored positions to operative positions in response to movement of the rear panel **30** from its closed position to its open position.

Still referring to **Fig. 1,** the illustrated apparatus **10** also includes a partition panel **40** that is movably attached to the front side **32** of the rear panel **30.** The partition panel **40** is movable between a stored position in face-to-face relation with the rear panel front side **32** and an operative position disposed substantially normal to the base surface **22** and to the rear panel **30.** The partition panel **40** may move from its closed position to its open position in response to movement of the rear panel **30** from its closed position to its open position. Alternatively, movement of the partition panel **40** may be independent of movement of the rear panel **30.** The partition panel **40** divides the compartment **35** into multiple sections **35a, 35b** when in the operative position.

In the illustrated embodiment, the partition panel **40** is generally parallel with the first and second end panels **39a, 39b** when the apparatus **10** is in an open position. Although only a single partition panel **40** is illustrated, it is understood that multiple partition panels may be utilized according to embodiments of the present invention.

The partition panel **40** may be movably attached to the front side **32** of the rear panel **30** via one or more hinges **42a.** Alternatively, the partition panel **40** may be movably attached to the base surface **22** via one or more hinges **42b.** A hinge of virtually any type may be utilized to movably attach the partition panel **40** to either the rear panel front side **32** or to the base surface **22.** Embodiments of the present invention are not limited to a particular type of hinge.

Still referring to **Fig. 1,** a handle **70** is attached to the partition panel **40** and is configured to be grasped by a user and used to move the rear panel **30** from the closed position to the open position, thereby causing the end panels **39a, 39b** to move to their respective operative positions to form a compartment **35** for receiving items therein. The handle **70** may then be used to move the partition panel **40** to its operative position to form compartments **35a, 35b.** According to alternative embodiments of the present invention, the handle **70** may be attached to the rear panel **30.** Handles having various shapes and configurations may be utilized in accordance with embodiments of the present invention. Moreover, handles may be located on the partition panel **40** and/or on the rear panel **30** in various locations. It is to be understood that embodiments of the present invention do not require a handle (*i.e.*, handles are optional).

According to additional embodiments of the present invention, one or more projections **50** (*e.g.,* hooks) may be provided and may extend from the rear panel front side **32** as illustrated in **Fig. 1.** Each such projection **50** is configured to support articles suspended therefrom, such as loaded grocery bags, and the like.

According to additional embodiments of the present invention, cargo netting **60** configured to enclose the compartment **35** and/or compartments **35a, 35b** and items stored therewithin, may be attached to the rear panel **30** as illustrated in **Fig. 1.**

In operation, when it is desired to load and transport items in the vehicle compartment **12** of a vehicle having the collapsible apparatus **10** of **Fig. 1** installed therein, the apparatus **10** is moved from the stored position and snapped into the open position with one easy motion of the handle **70.** According to embodiments of the present invention, the rear panel **40,** end walls **39a, 39b,** and partition panel **40** are configured to snap into a locked orientation such that they remain firmly in place until it is desired to close the apparatus **10.**

Movement of the partition panel **40** from a stored position to an operative position may cause the rear panel **30** to move from the closed position to the open position which, in turn, causes the first and second end panels **39a, 39b** to move from the respective stored positions to the respective operative positions. Alternatively, movement of the rear panel **30** from a stored position to an operative position may cause the first and second end panels **39a, 39b** to move from the respective stored positions to the respective operative positions. Operation of the partition panel **40** may be independent of movement of the rear panel **30.**

When the apparatus **10** is no longer desired for use in storing items therein, the above procedures can be reversed. For example, any additional partition panels may be pivoted such that they are disposed against either the base surface **22** or the rear panel front side **32,** and then the rear panel **30** can be moved to a closed position, thereby causing the end panels **39a, 39b** to move to their closed positions. Accordingly, apparatus according to embodiments of the present invention can be moved quickly and easily from stored, closed positions to open, operative positions.

Referring to **Fig. 2,** a collapsible storage apparatus **110** for storing items within a vehicle compartment, according to alternative embodiments of the present invention is illustrated. The illustrated apparatus **110** includes a base **120** having a portion **120a** that has a sloped configuration. A rear panel **130** is movably attached to the base **120** and includes an opening **131** formed in a portion thereof, as illustrated. Cargo netting **60** extends across the rear panel opening **131** and allows a user to place items within the compartment **135** formed by the rear panel **130** and base sloped portion **120a.** A partition panel **140** is also provided that is movably secured either to the rear panel **130** or to the base **120.** As described above, the partition panel **140** is movable between a stored position and an operative position.

A locking member **150** is also provided that is configured to maintain the rear panel **130** of the apparatus **110** in the open position. The illustrated locking member **150** is configured to move upwardly and downwardly relative to the base **120.** When the rear panel **130** is moved to the open position, the locking member **150** is moved downwardly to maintain the rear panel **130** in the open position. To lower the rear panel **130** to the closed position, the locking member **150** is moved upwardly, which then allows the rear panel **130** to pivot. Various types of locking member having various configurations may be utilized in accordance with embodiments of the present invention. Embodiments of the present invention are not limited to the illustrated locking member **150.**

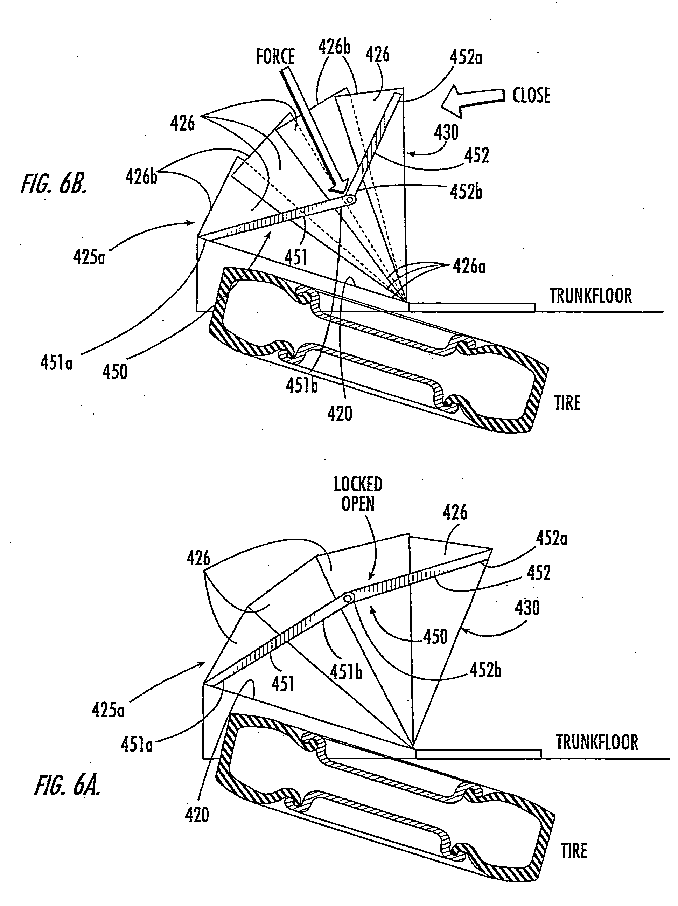

Referring to **Fig. 4,** a collapsible storage apparatus **310** for storing items within a vehicle compartment, according to alternative embodiments of the present invention is illustrated. The illustrated apparatus **310** includes a pair of partition panels **340a, 340b** movably attached to a base surface **322** (or adjacent thereto) in adjacent, spaced-apart relationship. Each partition panel **340a, 340b** is movable between a stored position in face-to-face relation with the base surface **322** and an operative position disposed substantially normal to the base surface **322** and to the rear panel **340** so as to divide the compartment **335** into multiple sections. A handle **370** is rotatably connected to the pair of partition panels **340a, 340b** via member **350.** The handle **370** is configured to be grasped by a user and to move the partition panels **340a, 340b** from the stored positions to the operative positions.

To move the partition panels **340a, 340b** from a stored position to an operative position, a user grasps the handle **370** which is lying in face-to-face relation with the base surface **322,** rotates the handle **370** as indicated by arrow **A1** and pulls upwardly as indicated by arrow **A2.** The partition panels **340a, 340b** follow the movement indicated by arrow **A2** and move to an operative position as indicated by arrows **A3** and **A4,** respectively.

When not needed, the partition panels **340a, 340b** can be returned to a stored position by reversing the above operations. According to embodiments of the present invention, the partition panels **340a, 340b** and handle **370** may be maintained in a flush-mounted configuration within the base **322** when stored. However, it is not required that the partition panels **340a, 340b** and handle **370** are maintained in a flush-mounted configuration within the base **322** when stored.

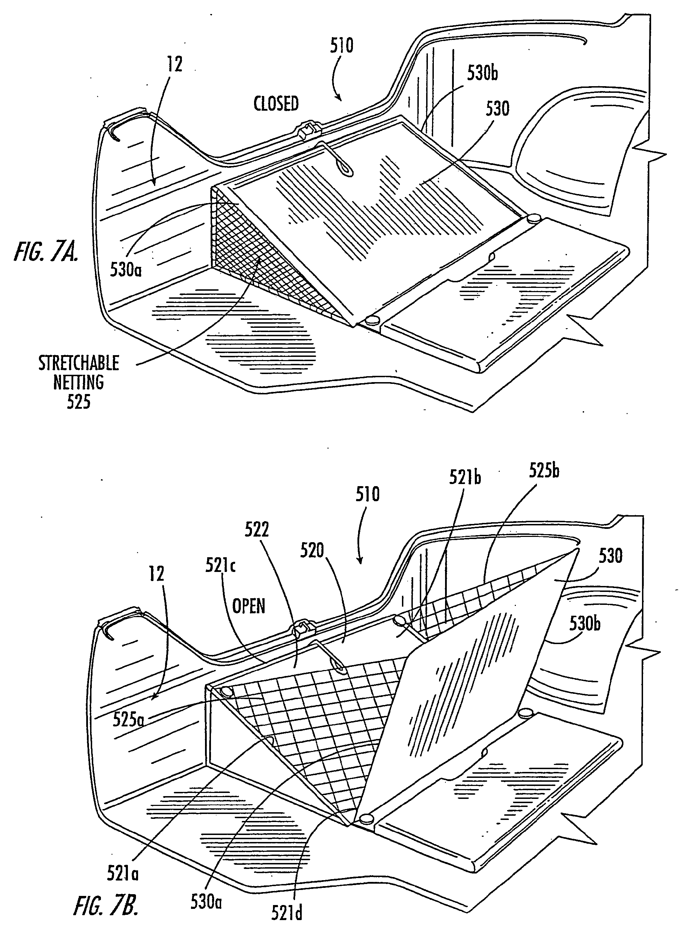

Referring now to **Figs. 5A-5B,** a collapsible storage apparatus **410** for storing items within a vehicle compartment **12,** according to other embodiments of the present invention, is illustrated. The apparatus **410** includes a base **420** disposed on the floor **14** of a vehicle compartment **12.** The base **420** includes opposite first and second end portions **421a, 421b,** opposite first and second edge portions **421c, 421d,** and a surface **422** exposed to the vehicle compartment **12.** First and second expandable walls **425a, 425b** extend from the base surface adjacent the respective first and second end portions **421a, 421b** and are attached to a panel **430.**

The panel **430** is pivotally attached to the base **420** and includes opposite first and second end portions **430a, 430b.** The panel first and second end portions **430a, 430b** are connected to the respective first and second expandable walls **425a, 425b.** The illustrated panel **430** includes an aperture **431** formed therethrough with cargo netting **60** overlying the aperture **431.**

The panel **430** is movable between a closed position in overlying, face-to-face relation with the base surface **422 (Fig. 5A)** and an open position disposed substantially transverse to the base surface 422 **(Fig. 5B).** The base **422,** first and second expandable walls **425a, 425b,** and panel **430** define one or more storage compartments for receiving items therein.

The illustrated expandable walls **425a, 425b** each include a plurality of members **426** pinned together at a first end **426a** and having opposite free ends **426b.** The members **426** of each expandable wall **425a, 425b** are configured to move from a stacked relationship **(Fig. 5A)** to a fanned relationship **(Fig. 5B)** when the panel **430** is moved from a closed position **(Fig. 5A)** to an open position **(Fig. 5B).**

Embodiments of the present invention are not limited to the illustrated expandable walls **425a, 425b.** Expandable and collapsible walls of various types and configurations may be utilized (*e.g.,* telescoping walls; walls having accordion-type bellows; etc.).

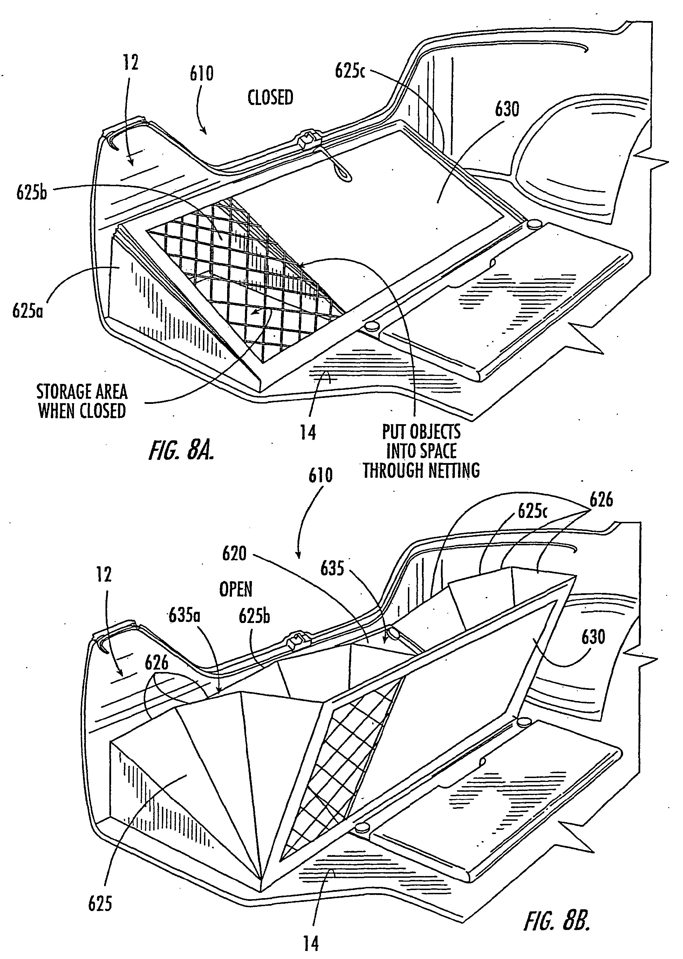

As illustrated in **Figs. 6A-6B,** a locking member **450** is provided to releasably secure the panel **430** in an open position. A locking member **450** may be provided for each expandable wall **425a, 425b,** or for just one expandable wall (*i.e.,* **425a** or **425b).** The illustrated locking member **450** includes first and second elongated arms **451, 452**, each having opposite first and second ends **451a, 451b, 452a, 452b.** The first arm first end **451a** is pivotally attached to the base **420,** or adjacent thereto. The second arm first end **452a** is pivotally attached to the panel **430.** The second ends **451b, 452b** of the first and second arms **451, 452** are pivotally attached together.

To lock the panel **430** in an open position, the second ends **451b, 452b** of first and second arms **451, 452** are pulled upwardly such that the configuration of the locking member **450** prevents movement of the panel **430** towards the base **420 (Fig. 6A)**. To unlock the panel **430** from an open position and permit the panel **430** to move to a closed position, a downwardly force **F** is applied to the second ends **451b, 452b** of first and second arms **451, 452,** as illustrated in **Fig. 6B.** The members **426** of each expandable wall **425a, 425b** can then move from a fanned relationship to a stacked relationship as the panel **430** is moved to a closed position.

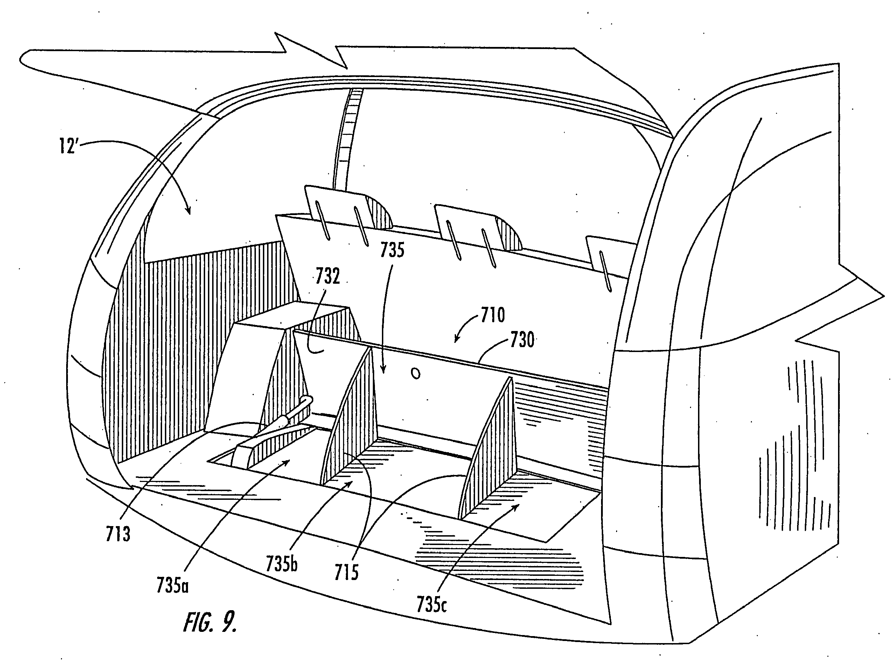

Referring now to **Figs. 7A-7B,** a collapsible storage apparatus **510** for storing items within a vehicle compartment, according to other embodiments of the present invention, is illustrated. The apparatus **510** includes a base **520** disposed on the floor **14** of a vehicle compartment **12.** The base **520** includes opposite first and second end portions **521a, 521b,** opposite first and second edge portions **521c, 521d,** and a surface **522** exposed to the vehicle compartment **12.** Elastic cargo netting **525a, 525b** extends from the base surface **522** adjacent the respective first and second end portions **521a, 521b** and is attached to a panel **530.**

The panel **530** is pivotally attached to the base **520** and includes opposite first and second end portions **530a, 530b.** The panel first and second end portions **530a, 530b** are connected to the elastic cargo netting **525a, 525b.** The panel **530** is movable between a closed position in overlying, face-to-face relation with the base surface **522 (Fig. 7A)** and an open position disposed substantially transverse to the base surface **522 (Fig. 7B).** The base **522,** elastic cargo netting **525a, 525b,** and panel **530** define one or more storage compartments for receiving items therein.

Embodiments of the present invention are not limited to elastic cargo netting. Various types of elastic material may be utilized.

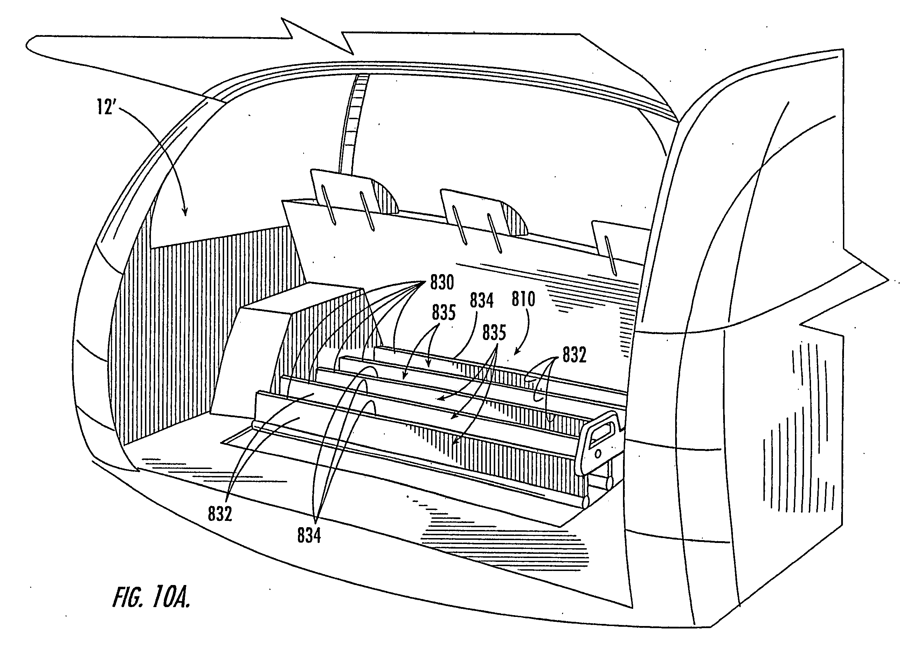

Referring now to **Figs. 8A-8B,** a collapsible storage apparatus **610** for storing items within a vehicle compartment **12,** according to other embodiments of the present invention, is illustrated. The apparatus **610** includes two compartments **635a, 635b** in which items can be stored. The first compartment **635a** is defined by the vehicle floor **14,** a pair of expandable walls **625a, 625b,** and panel **630.** The portion of panel **630** overlying compartment **635a** includes an aperture **631** formed therethrough with cargo netting 60 overlying the aperture **631.** The second compartment **635b** is defined by base **620,** a pair of expandable walls **625b, 625c,** and panel **630.**

The illustrated expandable walls **625a, 625b, 625c** each include a plurality of members **626** pinned together at a first end **626a** and having opposite free ends **626b.** The members **626** of each expandable wall **625a, 425b** are configured to move from a stacked relationship **(Fig. 8A)** to a fanned relationship **(Fig. 8B)** when the panel **630** is moved from a closed position **(Fig. 8A)** to an open position **(Fig. 8B)** as described above.

Embodiments of the present invention are not limited to the illustrated expandable walls **625a, 625b, 625c.** Expandable and collapsible walls of various types and configurations may be utilized (*e.g.,* telescoping walls; walls having accordion-type bellows; etc.).

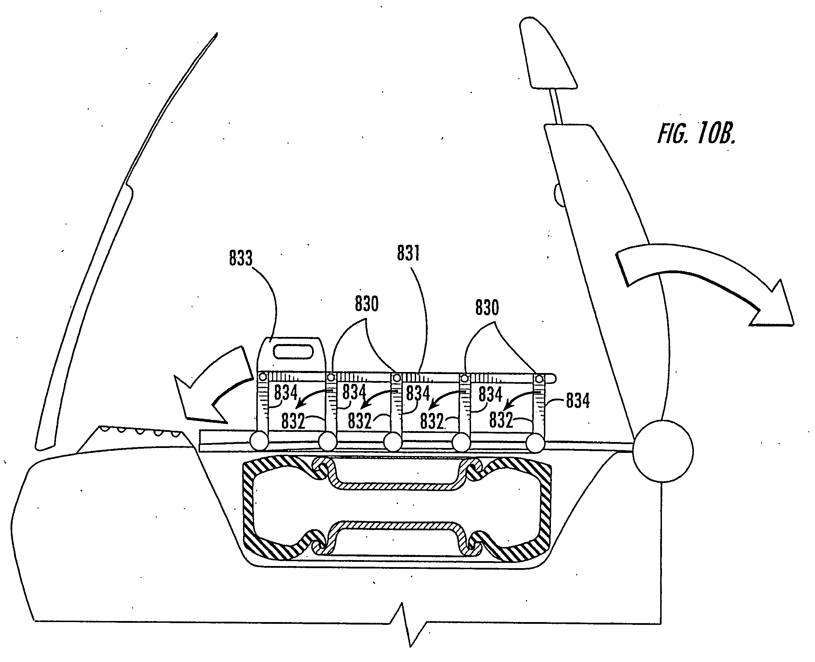

Referring to **Fig. 9,** an apparatus **710** for storing items within a vehicle compartment **12'** according to additional embodiments of the present invention is illustrated. The apparatus **710,** illustrated in Fig. 9 in an open position, includes a rear panel **730** that is pivotally attached within the vehicle compartment **12'** (*e.g.,* attached to a base or floor covering or floor) and that defines a storage compartment **735** in conjunction with the floor (or base or floor covering). A biasing device **713** is attached to the rear panel **730** and to the vehicle floor (or other portion of the vehicle compartment **12')** and is configured to urge the rear panel **730** to the open position. The illustrated biasing device **713** is a telescoping strut (*e.g.,* gas, hydraulic) of the type utilized in the automotive industry for supporting hatchback doors, hoods, and the like. Telescoping struts are well understood by those skilled in the art and need not be described further herein. The illustrated biasing device **713** may also serve the function of a locking member configured to releasably retain the rear panel **730** in the open position. Alternatively, the biasing device **713** may be configured to urge the rear panel **730** from an open position to a closed position and to help maintain the rear panel **730** in a closed position.

It is to be understood that additional biasing devices may be utilized that serve the same or different functions. For example, one or more biasing devices may be provided to urge the rear panel **730** to an open position, and one or more biasing devices may be provided to urge the rear panel **730** to a closed position.

Various types of biasing devices may be utilized in accordance with embodiments of the present invention. Embodiments of the present invention are not limited to telescoping struts. Springs, dampeners, and other known biasing devices may also be utilized, without limitation.

The apparatus **710** of **Fig. 9** also includes flexible material **715** attached to the vehicle floor (or base or floor covering) and to the front side **732** of the rear panel **730** that divides the storage compartment **735** into multiple sections **735a, 735b, 735c** when the rear panel **730** is moved to the open position. An exemplary flexible material **715** may be cargo netting. However, embodiments of the present invention are not limited to cargo netting. Various types of materials may be utilized, without limitation.

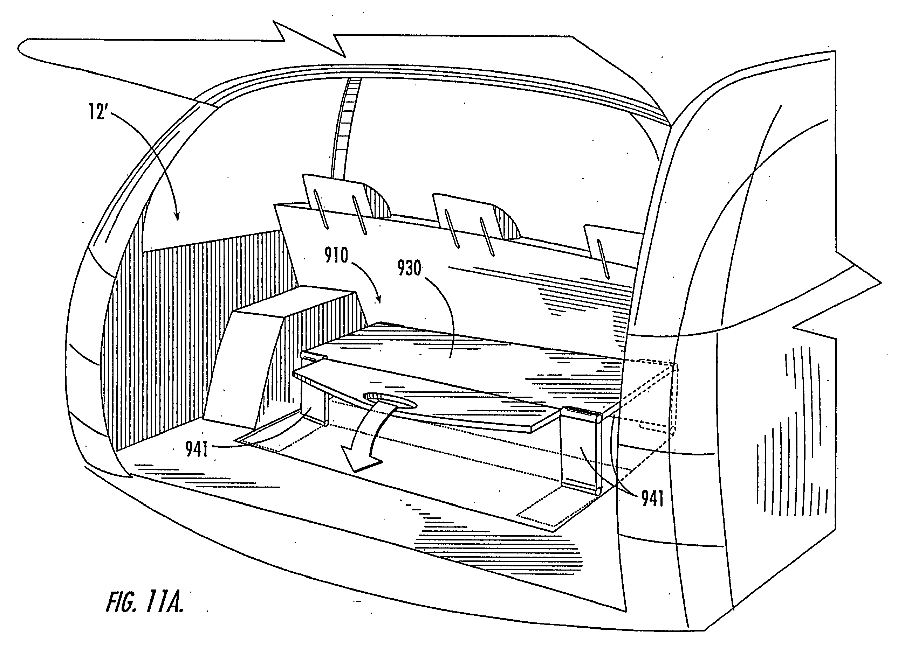

Referring to **Figs. 10A-10B,** an apparatus **810** for storing items within a vehicle compartment **12'** according to additional embodiments of the present invention is illustrated in an open position. The apparatus **810,** illustrated in **Figs. 10A-10B** in an open position, includes a plurality of elongate panels **830** pivotally attached within the vehicle compartment **12'** (*e.g.,* attached to a base or floor covering or floor) in adjacent, spaced-apart relationship, and that define a plurality of storage compartments **835** in conjunction with the floor (or base or floor covering). The illustrated panels **830** are in substantially parallel, spaced-apart relationship.

Each panel **830** includes opposite front and rear sides **832, 834.** The panels **830** are collectively movable between closed and open positions. In the closed position, the front side **832** of each panel **830** is in overlying, face-to-face relation with the vehicle floor (or base or floor covering). In the open position, the panels **830** are collectively disposed substantially transverse (*e.g.,* normal) to the vehicle floor (or base or floor covering) to define a plurality of storage compartments **835** for receiving items therein.

In the illustrated embodiment, the panels **830** are collectively movable between a closed and open position via a member **831** that is movably mounted to each panel **830.** In the illustrated embodiment, member **831** is movably attached to each panel **830** adjacent a respective end portion thereof. However, it is understood that member **831** may be movably attached to each panel **830** in various locations. Moreover, member **831** may have various configurations. A handle **833** is attached to the member **831** and is configured to be grasped by a user to move the member **831** to thereby collectively move the panels **830** between closed and open positions.

According to additional embodiments of the present invention, at least one biasing device (not shown) may be attached to one or more of the panels **830** that is configured to urge the panels **830** to the open position. In addition, a floor covering may be disposed on the vehicle compartment floor. The same floor covering may be disposed on the rear side **834** of one or more of the panels **830** such that the apparatus **810** has an integral look with the vehicle compartment **12'** when the panels **830** are collectively in the closed position.

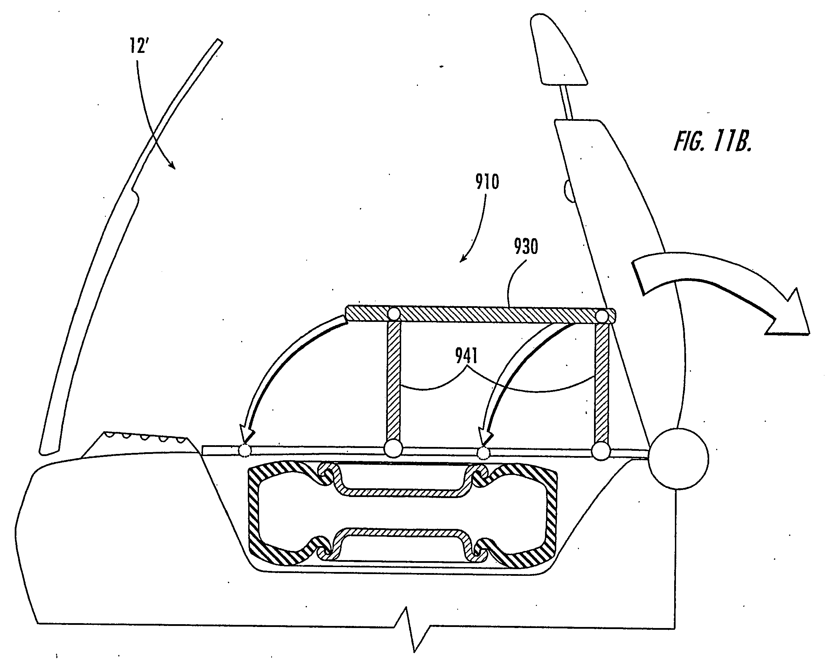

Referring to **Figs. 11A-11B,** an apparatus **910** for storing items within a vehicle compartment **12'** according to additional embodiments of the present invention is illustrated. The apparatus **910** includes an elongate panel **930** pivotally attached to the vehicle compartment floor (or floor covering or base) via leg members **941.** The panel **930** is movable between a stored position in face-to-face, substantially contacting relation with the floor (or base or floor covering) and an operative position wherein the panel **930** is in spaced-apart, face-to-face relation with the floor (or base or floor covering). In the operative position, the panel **930** can serve the function of a table and/or shelf. In the illustrated embodiment, a handle **933** is connected to the panel **930** and is configured to be grasped by a user and to move the panel **930** between the stored and operative positions.

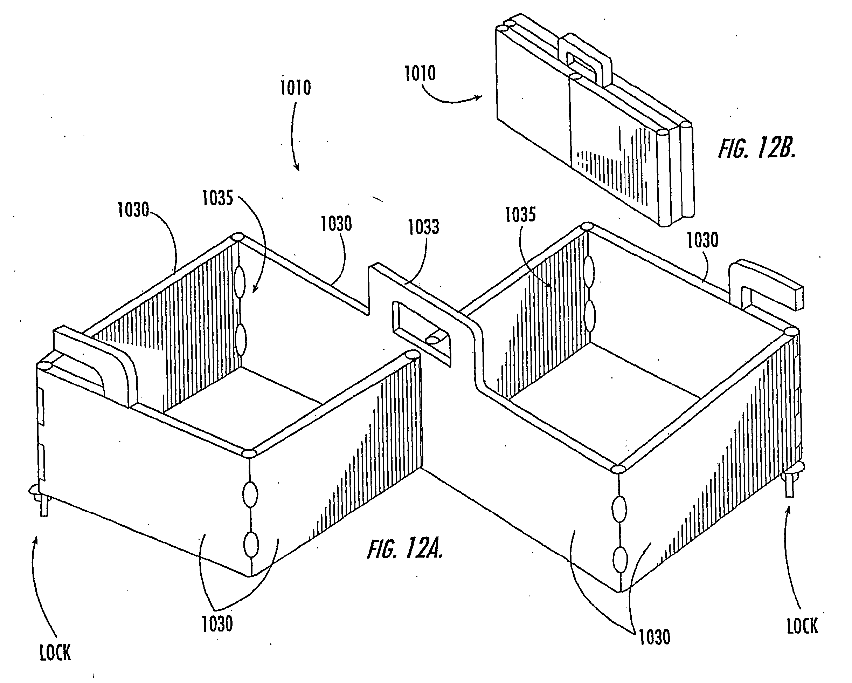

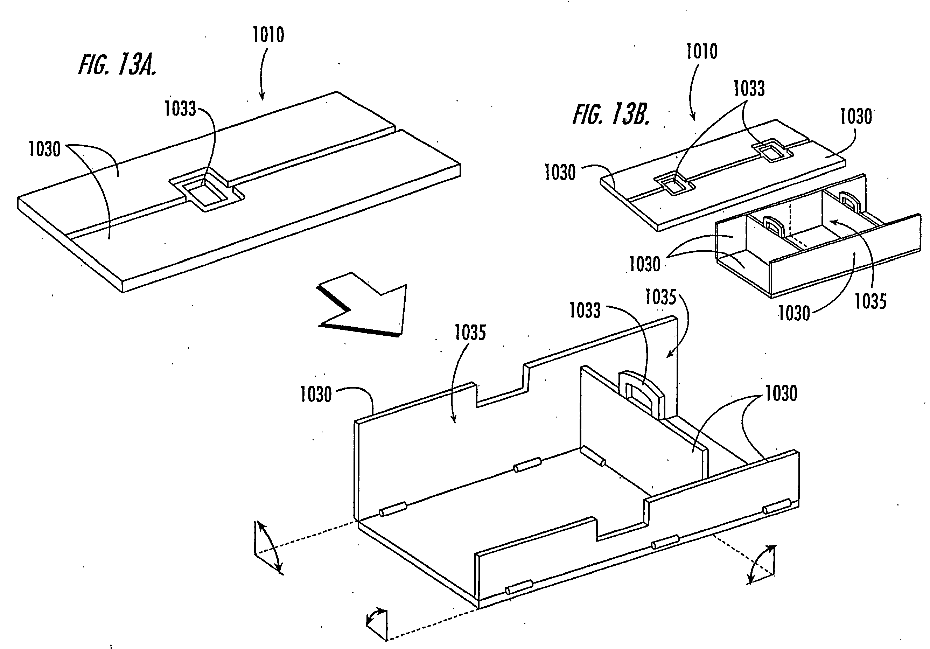

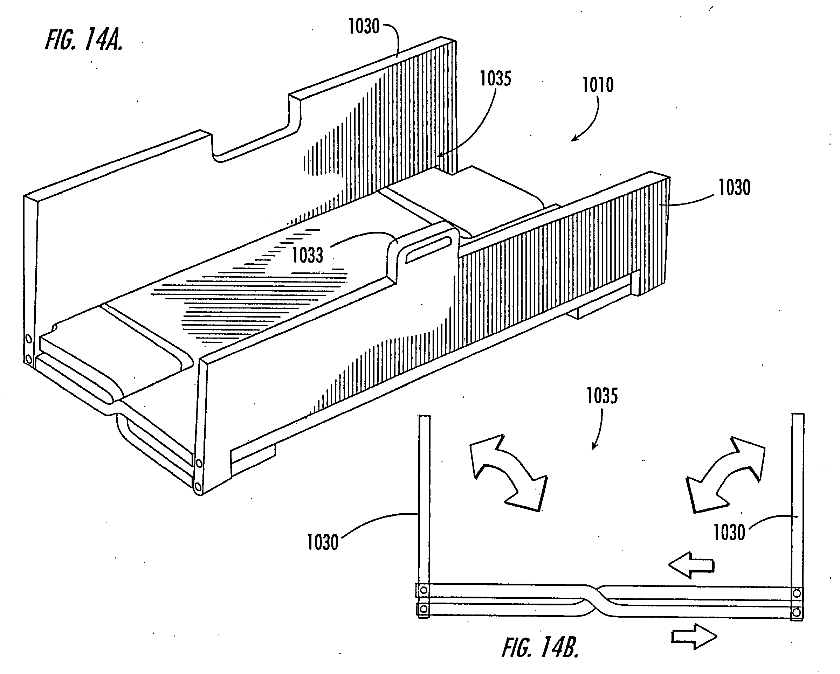

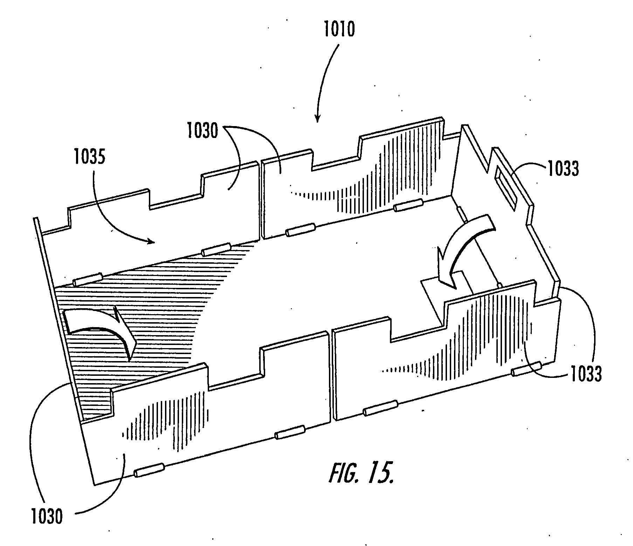

Referring to **Figs. 12A-12B, 13A-13B, 14A-14B,** and **15,** various embodiments of a collapsible storage apparatus **1010** for storing items within a vehicle compartment are illustrated. In each of the illustrated embodiments, the respective apparatus **1010** includes a plurality of walls **1030** that are pivotally attached to the floor of a vehicle (or to a base or to a floor covering). The walls **1030** are configured to overlie the floor (or base or floor covering) in a folded, flat configuration, and to unfold into one or more storage compartments **1035** for receiving items therein. In each of the illustrated embodiments, a handle **1033** is connected to one of the walls **1030** and is configured to be grasped by a user and used to unfold one or more of the various walls **1030** into one or more storage compartments **1035.**

Each of the storage apparatus embodiments described and illustrated herein may be portable such that they can be easily placed within a vehicle compartment and removed therefrom. Although embodiments of the present invention have been described and illustrated with respect to installation within the trunk of an automobile, it is understood that apparatus according to embodiments of the present invention can be installed in various other compartments and areas of various types of vehicles.

The foregoing is illustrative of the present invention and is not to be construed as limiting thereof. Although a few exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention as defined in the claims. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims. The invention is defined by the following claims, with equivalents of the claims to be included therein.

## Claims

1. An apparatus for storing items within a vehicle compartment, wherein the vehicle compartment includes a floor, the apparatus comprising:
an elongate planar panel comprising opposite first and second elongated edge portions, opposite first and second end portions, and a planar handle portion extending outwardly from the first elongated edge portion in co-planar relationship with the elongated planar panel, wherein the handle portion is configured to be grasped by a user and to move the panel between stored and operative positions;
a planar first leg member comprising opposite proximal and distal ends, wherein the first leg member proximal end is pivotally connected to the first elongated edge portion adjacent the first end portion, and wherein the first leg member distal end is pivotally attached to the floor;
a planar second leg member comprising opposite proximal and distal ends, wherein the second leg member proximal end is pivotally connected to the second elongated edge portion adjacent the first end portion, and wherein the second leg member distal end is pivotally attached to the floor;
a planar third leg member comprising opposite proximal and distal ends, wherein the third leg member proximal end is pivotally connected to the first elongated edge portion adjacent the second end portion, and wherein the third leg member distal end is pivotally attached to the floor;
a planar fourth leg member comprising opposite proximal and distal ends, wherein the fourth leg member proximal end is pivotally connected to the second elongated edge portion adjacent the second end portion, and wherein the fourth leg member distal end is pivotally attached to the floor;
wherein the elongate panel is movable between a stored position in face-to-face relation with the floor and in contacting relation with the first, second, third and fourth leg members, and an operative position in spaced-apart, face-to-face relation with the floor such that the panel can serve the function of a table and/or shelf.

2. The apparatus of Claim 1, wherein a floor covering is disposed on the floor and wherein the floor covering is disposed on the panel.

3. A vehicle, comprising:
a compartment comprising a floor; and
an apparatus for storing items within the compartment, comprising:
an elongate planar panel comprising opposite first and second elongated edge portions, opposite first and second end portions, and a planar handle portion extending outwardly from the first elongated edge portion in co-planar relationship with the elongated planar panel, wherein the handle portion is configured to be grasped by a user and to move the panel between stored and operative positions;
a planar first leg member comprising opposite proximal and distal ends, wherein the first leg member proximal end is pivotally connected to the first elongated edge portion adjacent the first end portion, and wherein the first leg member distal end is pivotally attached to the floor;
a planar second leg member comprising opposite proximal and distal ends, wherein the second leg member proximal end is pivotally connected to the second elongated edge portion adjacent the first end portion, and wherein the second leg member distal end is pivotally attached to the floor;
a planar third leg member comprising opposite proximal and distal ends, wherein the third leg member proximal end is pivotally connected to the first elongated edge portion adjacent the second end portion, and wherein the third leg member distal end is pivotally attached to the floor;
a planar fourth leg member comprising opposite proximal and distal ends, wherein the fourth leg member proximal end is pivotally connected to the second elongated edge portion adjacent the second end portion, and wherein the fourth leg member distal end is pivotally attached to the floor;
wherein the elongate panel is movable between a stored position in face-to-face relation with the floor and in contacting relation with the first, second, third and fourth leg members, and an operative position in spaced-apart, face-to-face relation with the floor such that the panel can serve the function of a table and/or shelf.

4. The vehicle of Claim 3, wherein a floor covering is disposed on the floor and wherein the floor covering is disposed on the panel.

5. An apparatus for storing items within a vehicle compartment, wherein the vehicle compartment includes a floor, the apparatus comprising:
a plurality of elongate panels pivotally attached to the floor in adjacent, spaced-apart relationship, wherein each panel comprises opposite front and rear sides, wherein the panels are collectively movable between closed and open positions, wherein the front side of each panel is in overlying, face-to-face relation with the floor when in the closed position, and wherein the panels are collectively disposed substantially transverse to the floor when in the open position to define a plurality of storage compartments for receiving items therein.

6. The apparatus of Claim 5, further comprising at least one biasing device attached to one or more panels that is configured to urge the panels to the open position.

7. The apparatus of Claim 5, wherein a floor covering is disposed on the floor and wherein the floor covering is disposed on the rear side of one or more of the panels.

8. The apparatus of Claim 5, wherein the panels are in substantially parallel, spaced-apart relationship.

9. The apparatus of Claim 5, further comprising a handle configured to collectively move the panels between the closed and open positions.

10. An apparatus for storing items within a vehicle compartment, wherein the vehicle compartment includes a floor, the apparatus comprising:
a plurality of walls pivotally attached to the floor, wherein the walls are configured to overlie the floor in a folded, flat configuration, and to unfold into a storage compartment for receiving items therein.

11. The apparatus of Claim 10, further comprising a handle connected to one of the walls that is configured to be grasped by a user and to unfold the walls into a storage compartment.

12. A vehicle, comprising:
a compartment comprising a floor; and
an apparatus for storing items within the compartment, comprising a plurality of walls pivotally attached to the floor, wherein the walls are configured to overlie the floor in a folded, flat configuration, and to unfold into a storage compartment for receiving items therein.

13. The vehicle of Claim 12, further comprising a handle connected to one of the walls that is configured to be grasped by a user and to unfold the walls into a storage compartment.

14. An apparatus for storing items within a vehicle compartment, wherein the vehicle compartment includes a floor and a floor covering disposed on the floor, the apparatus comprising:
a rear panel pivotally attached to the floor covering and comprising opposite front and rear sides and opposite first and second end portions, wherein the rear panel is movable between a closed position wherein the front side is in overlying, face-to-face relation with the floor covering and an open position wherein the rear panel is disposed substantially transverse to the floor covering and defines a storage compartment for receiving items therein that is partially enclosed by the floor covering and the rear panel.

15. An apparatus for storing items within a vehicle compartment, wherein the vehicle compartment includes a floor, the apparatus comprising:
a base disposed on the floor and having a surface exposed to the vehicle compartment; and
a rear panel pivotally attached to the base and comprising opposite front and rear sides and opposite first and second end portions, wherein the rear panel is movable between a closed position wherein the front side is in overlying, face-to-face relation with the base surface and an open position wherein the rear panel is disposed substantially normal to the base surface and defines a storage compartment for receiving items therein that is partially enclosed by the base and the rear panel.

16. An apparatus for storing items within a vehicle compartment, wherein the vehicle compartment includes a floor, the apparatus comprising:
a base disposed on the floor and having a surface exposed to the vehicle compartment;
a rear panel pivotally attached to the base and comprising opposite front and rear sides, opposite first and second end portions, and opposite edge portions, wherein the rear panel is movable between a closed position wherein the front side is in overlying, face-to-face relation with the base surface and an open position wherein the rear panel is disposed substantially normal to the base surface;
a handle attached to the rear panel, wherein the handle is configured to be grasped by a user; and
first and second end panels movably attached to the respective first and second end portions of the rear panel, wherein the respective first and second end panels are movable between respective stored positions in face-to-face relation with the rear panel front side and respective operative positions disposed substantially normal to the base surface and to the rear panel in space-apart substantially parallel relationship, wherein the first and second end panels move from the respective stored positions to the respective operative positions in response to movement of the rear panel, via the handle, from the closed position to the open position, and wherein the base, rear panel, and first and second end panels define a storage compartment for receiving items therein.

17. An apparatus for storing items within a vehicle compartment, wherein the vehicle compartment includes a floor, the apparatus comprising:
a base disposed on the floor and having a surface exposed to the vehicle compartment;
a rear panel pivotally attached to the base and comprising opposite front and rear sides, opposite first and second end portions, and opposite edge portions, wherein the rear panel is movable between a closed position wherein the front side is in overlying, face-to-face relation with the base surface and an open position wherein the rear panel is disposed substantially normal to the base surface;
a partition panel movably attached to the front side of the rear panel, wherein the partition panel is movable between a stored position in face-to-face relation with the rear panel front side and an operative position disposed substantially normal to the base surface and to the rear panel; and
first and second end panels movably attached to the respective first and second end portions of the rear panel, wherein the respective first and second end panels are movable between respective stored positions in face-to-face relation with the rear panel front side and respective operative positions disposed substantially normal to the base surface and to the rear panel in space-apart substantially parallel relationship;
wherein movement of the partition panel from the stored position to the operative position causes the rear panel to move from the closed position to the open position which, in turn, causes the first and second end panels to move from the respective stored positions to the respective operative positions whereby a storage compartment is defined.

18. An apparatus for storing items within a vehicle compartment, wherein the vehicle compartment includes a floor, the apparatus comprising:
a base disposed on the floor, comprising opposite first and second end portions, opposite first and second edge portions, and a surface exposed to the vehicle compartment;
first and second expandable walls extending from the base surface adjacent the respective first and second end portions; and
a panel pivotally attached to the base and comprising opposite first and second end portions, wherein the first and second end portions of the panel are connected to the respective first and second expandable walls, and wherein the panel is movable between a closed position in overlying, face-to-face relation with the base surface and an open position disposed substantially transverse to the base surface, wherein the base, first and second expandable walls and panel define one or more storage compartments for receiving items therein.

19. An apparatus for storing items within a vehicle compartment, wherein the vehicle compartment includes a floor, the apparatus comprising:
a plurality of elongate panels pivotally attached to the floor in adjacent, spaced-apart relationship, wherein each panel comprises opposite front and rear sides, wherein the panels are collectively movable between closed and open positions, wherein the front side of each panel is in overlying, face-to-face relation with the floor when in the closed position, and wherein the panels are collectively disposed substantially transverse to the floor when in the open position to define a plurality of storage compartments for receiving items therein.

20. An apparatus for storing items within a vehicle compartment, wherein the vehicle compartment includes a floor, the apparatus comprising:
an elongate panel pivotally attached to the floor and movable between a stored position in face-to-face contacting relation with the floor and an operative position in spaced-apart, face-to-face relation with the floor such that the panel can serve the function of a table and/or shelf.

21. A vehicle, comprising:
a compartment comprising a floor and a floor covering disposed on the floor; and
an apparatus for storing items within the compartment, comprising:
a rear panel pivotally attached to the floor covering and comprising opposite front and rear sides and opposite first and second end portions, wherein the rear panel is movable between a closed position wherein the front side is in overlying, face-to-face relation with the floor covering and an open position wherein the rear panel is disposed substantially transverse to the floor covering and defines a storage compartment for receiving items therein that is partially enclosed by the floor covering and the rear panel.

22. A vehicle, comprising:
a compartment comprising a floor; and
an apparatus for storing items within the compartment, comprising:
a base disposed on the floor and having a surface exposed to the vehicle compartment; and
a rear panel pivotally attached to the base and comprising opposite front and rear sides and opposite first and second end portions, wherein the rear panel is movable between a closed position wherein the front side is in overlying, face-to-face relation with the base surface and an open position wherein the rear panel is disposed substantially normal to the base surface and defines a storage compartment for receiving items therein that is partially enclosed by the base and the rear panel.

23. A vehicle, comprising:
a compartment comprising a floor; and
an apparatus for storing items within the compartment, comprising:
a base disposed on the floor and having a surface exposed to the vehicle compartment;
a rear panel pivotally attached to the base and comprising opposite front and rear sides, opposite first and second end portions, and opposite edge portions, wherein the rear panel is movable between a closed position wherein the front side is in overlying, face-to-face relation with the base surface and an open position wherein the rear panel is disposed substantially normal to the base surface;
a handle attached to the rear panel, wherein the handle is configured to be grasped by a user; and
first and second end panels movably attached to the respective first and second end portions of the rear panel, wherein the respective first and second end panels are movable between respective stored positions in face-to-face relation with the rear panel front side and respective operative positions disposed substantially normal to the base surface and to the rear panel in space-apart substantially parallel relationship, wherein the first and second end panels move from the respective stored positions to the respective operative positions in response to movement of the rear panel, via the handle, from the closed position to the open position, and wherein the base, rear panel, and first and second end panels define a storage compartment for receiving items therein.

24. A vehicle, comprising:
a compartment comprising a floor; and
an apparatus for storing items within the compartment, comprising:
a base disposed on the floor and having a surface exposed to the vehicle compartment;
a rear panel pivotally attached to the base and comprising opposite front and rear sides, opposite first and second end portions, and opposite edge portions, wherein the rear panel is movable between a closed position wherein the front side is in overlying, face-to-face relation with the base surface and an open position wherein the rear panel is disposed substantially normal to the base surface;
a partition panel movably attached to the front side of the rear panel, wherein the partition panel is movable between a stored position in face-to-face relation with the rear panel front side and an operative position disposed substantially normal to the base surface and to the rear panel; and
first and second end panels movably attached to the respective first and second end portions of the rear panel, wherein the respective first and second end panels are movable between respective stored positions in face-to-face relation with the rear panel front side and respective operative positions disposed substantially normal to the base surface and to the rear panel in space-apart substantially parallel relationship;
wherein movement of the partition panel from the stored position to the operative position causes the rear panel to move from the closed position to the open position which, in turn, causes the first and second end panels to move from the respective stored positions to the respective operative positions whereby a storage compartment is defined.

25. A vehicle, comprising:
a compartment comprising a floor; and
an apparatus for storing items within the compartment, comprising:
a base disposed on the floor, comprising opposite first and second end portions, opposite first and second edge portions, and a surface exposed to the vehicle compartment;
first and second expandable walls extending from the base surface adjacent the respective first and second end portions; and
a panel pivotally attached to the base and comprising opposite first and second end portions, wherein the first and second end portions of the panel are connected to the respective first and second expandable walls, and wherein the panel is movable between a closed position in overlying, face-to-face relation with the base surface and an open position disposed substantially transverse to the base surface, wherein the base, first and second expandable walls and panel define one or more storage compartments for receiving items therein.

26. A vehicle, comprising:
a compartment comprising a floor; and
an apparatus for storing items within the compartment, comprising:
a plurality of elongate panels pivotally attached to the floor in adjacent, spaced-apart relationship, wherein each panel comprises opposite front and rear sides, wherein the panels are collectively movable between closed and open positions, wherein the front side of each panel is in overlying, face-to-face relation with the floor when in the closed position, and wherein the panels are collectively disposed substantially transverse to the floor when in the open position to define a plurality of storage compartments for receiving items therein.

27. A vehicle, comprising:
a compartment comprising a floor; and
an apparatus for storing items within the compartment, comprising:
an elongate panel pivotally attached to the floor and movable between a stored position in face-to-face contacting relation with the floor and an operative position in spaced-apart, face-to-face relation with the floor such that the panel can serve the function of a table and/or shelf.

28. A vehicle, comprising:
a compartment comprising a floor; and
an apparatus for storing items within the compartment, comprising a plurality of walls pivotally attached to the floor, wherein the walls are configured to overlie the floor in a folded, flat configuration, and to unfold into a storage compartment for receiving items therein.
